# EUROPEAN PATENT APPLICATION

(11) **EP 4 512 240 A1**
(43) Date of publication of application: **26.02.2025**
(21) Application number: 23792098.8
(22) Date of filing: 13.04.2023
(51) Int. Cl.: A01K 13/00, A46B 11/00, A46B 15/00

(54) **MULTIPURPOSE WASHING MACHINE FOR COMPANION ANIMALS**

(30) Priority: 19.04.2022 KR 20220047879
(71) Applicant: Ryu, Choulho, Asan-si Chungcheongnam-do 31467 (KR)
(72) Inventor: Ryu, Choulho, Asan-si Chungcheongnam-do 31467 (KR)
(74) Representative: Cabinet Chaillot
(86) International application number: PCT/KR2023/004972
(87) International publication number: WO 2023/204521

(57) **Abstract**

The present invention relates to a multipurpose washing machine for companion animals, capable of washing only the feet when a companion animal has been walked and capable of performing a bubble bath, hair removal, and a massage in combination when a companion animal is bathed. The present invention comprises: a cylindrical casing that is vertically open to provide a tunnel-type washing space into which the feet of a companion animal can be inserted; a first brush installed on the inner wall of the casing; a handle connected to one side of the casing; a water supply unit for spraying and supplying water toward the washing space; and a detergent supply unit for supplying detergent toward the washing space, wherein the detergent supply unit includes: a casing that includes a ring-shaped upper plate, a ring-shaped lower plate, an inner wall body, and an outer wall body to provide a detergent storage space for storing detergent; a detergent pump that is installed on the top of the casing or on the handle and pumps the detergent contained in the casing; and a detergent ejection nozzle that is installed on the inner wall of the casing and ejects the pumped detergent.

## Description

### [Technical Field]

The present invention relates to a washer for pets, and more particularly, to a multipurpose washer for pets that can be used for washing only the paws of a pet after walking the pet and used for giving a bubble bath, removing hair, and giving a massage when bathing the pet.

### [Background Art]

Wet wipes are commonly used to clean the paws of pets that become dirty after a walk outside. However, it is not possible to thoroughly remove contaminants with wet wipes. Even when wet wipes are used, since at least two to four sheets of wet wipes are used per walk, the amounts of wasted resources and generated waste increase.

Pets may develop enteritis or may be affected by pesticide residues due to licking their dirty paws, and their health may be put at risk. There is also a concern that mold and other contaminants may cause secondary infection in humans. There is also a concern that, in winter, calcium chloride sprayed on asphalt may remain on the paws of pets without being completely removed and cause burns on the paws.

A bathroom shower is used instead of wet wipes in some cases, but since pets tend to move when washed by hand, the risk of joint injury significantly increases. Also, there is an inconvenience of having to separately prepare a cleanser for removing contaminants, and since it is not possible to simultaneously spray water and the cleanser, a long time is taken to wash a pet.

Also, using a pet paw cleaner may be considered, but in this case, the paw pads of pets often dry out and crack, and using the cleaner for a long period of time is not good for the skin of pets. Also, maintenance costs are high due to expensive prices of cleaners and moisturizing creams.

Also, a pet washer has been proposed conventionally. In a washer used by filling a cup with water, when all paws are washed in the same water container, cross-contamination may occur due to washing a paw with water contaminated by another paw, and a process of replacing water with new water to thoroughly wash each paw needs to be repeated at least four to five times, which makes it very inconvenient to use.

A paw washer for companion dogs has been proposed conventionally in Korean Patent Registration No. 10-2186727, but the paw washer is only for washing paws and cannot be used for bathing.

### [Disclosure]

### [Technical Problem]

The present invention is directed to providing a pet paw washer for thoroughly washing the paws of a pet after walking the pet.

The present invention is also directed to providing a pet paw washer allowing water and a cleanser to be selected and suitably used according to the degree of contamination of a pet's paw without irritating the pet's skin.

The present invention is also directed to providing a pet paw washer allowing the pet's skin to be protected using clean water to prevent damage to the skin due to harmful components in wet wipes remaining on the skin when washing a pet's paw.

The present invention is also directed to providing a multipurpose pet washer that can also be used when bathing a pet and can provide a bubble bath, remove dead hair, and give a massage.

The present invention is also directed to providing a pet washer allowing a cleanser to be sprayed together with water to easily wash a paw and give a bubble bath.

The present invention is also directed to providing a pet washer capable of preventing the washer from slipping from a user's hand when the user bathes a pet, thereby allowing the user to comfortably bathe a pet.

### [Technical Solution]

The above objectives are achieved by a pet washer including a cylindrical casing that is vertically open to provide a tunnel-like washing space into which a pet's paw is able to be fitted; a first brush installed on an inner wall of the casing to protrude and extend toward the washing space; a handle connected to one side of the casing; a water supply part configured to spray and supply water toward the washing space; and a cleanser supply part configured to supply a cleanser toward the washing space, wherein the cleanser supply part includes the casing including a ring-shaped upper plate, a ring-shaped lower plate, an inner wall body, and an outer wall body to provide a cleanser storage space configured to store a cleanser, a cleanser pump installed on an upper portion of the casing or on the handle to pump the cleanser contained in the casing, and a cleanser ejection nozzle installed on the inner wall body of the casing to eject the pumped cleanser, and the water supply part includes a ring-shaped spray nozzle installed at the casing for a water spray hole to face the washing space, a water supply tube installed inside the handle and having one end connected to the spray nozzle and the other end extending to a rear end of the handle; a connector configured to connect the water supply tube and a water pipe, and a water control switch installed on the water supply tube.

The pet washer may further include a second brush installed in a circumferential direction on a bottom surface of the lower plate of the casing; and a holder installed on an upper end of the casing for a user to easily apply a force while gripping the casing by hand, wherein finger fitting grooves into which the user's fingers are able to be fitted may be provided in the holder, and an anti-slip pad configured to prevent slipping may be fixed and installed at a surface of the holder that comes in close contact with the user's fingers when the user gives a bath.

### [Advantageous Effects]

According to the present invention, a multipurpose washer for pets that allows a pet's paw to be thoroughly washed after a walk and allows water and a cleanser to be conveniently selected and suitably used according to the degree of contamination of the paw is provided. Also, a multipurpose washer for pets that can also be used when bathing a pet and can provide a bubble bath, remove dead hair, and give a massage, and further, allows a cleanser to be sprayed together with water to easily wash a paw and give a bubble bath is provided. According to an embodiment of the present invention, a pet washer capable of preventing the washer from slipping from a user's hand when the user bathes a pet, thereby allowing the user to comfortably bathe a pet, is provided.

### [Description of Drawings]

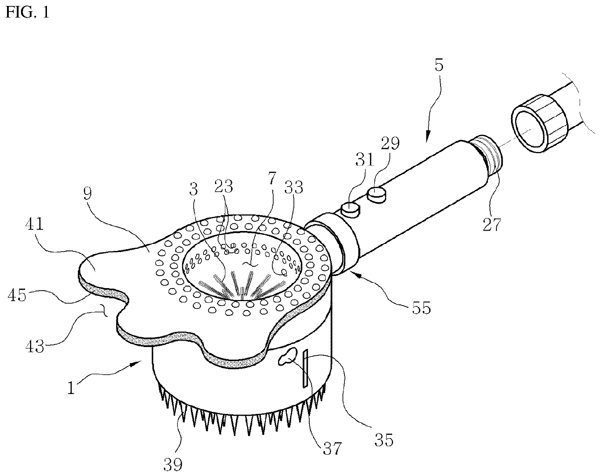

FIG. 1 is a perspective view of a multipurpose washer for pets according to an embodiment of the present invention.
FIG. 2 is a cross-sectional configuration diagram of the multipurpose washer for pets according to an embodiment of the present invention.
FIG. 3 is a plan view of the multipurpose washer for pets according to an embodiment of the present invention.

### [Modes of the Invention]

Hereinafter, details of the present invention will be described in detail with reference to the accompanying drawings.

A multipurpose washer for pets according to the present invention is mainly used for washing the paws of a pet but has a function of allowing giving a bubble bath to the entire body of a pet and washing the paws of the pet to be simultaneously performed conveniently without a need to replace a brush with a separate bathing brush when bathing the pet.

The multipurpose washer for pets basically includes a cylindrical casing 1, a first brush 3, a handle 5, a water supply part, and a cleanser supply part.

The cylindrical casing 1 is vertically open to provide a tunnel-like washing space 7 into which a pet's paw is able to be fitted.

The first brush 3 is installed on an inner wall of the casing 1 to protrude toward the washing space 7. The first brush 3 is provided as a plurality of first brushes 3 installed in a circumferential direction and is made of a soft material. The first brush 3 has an end split into two and is designed to be thin, as illustrated, to thoroughly remove foreign matter from a pet's paw.

The handle 5 is connected to one side of the casing 1 integrally or by assembly. The handle 5 is formed in the shape of a bar having a length and a cross-sectional area that allow a user to comfortably grip the handle 5.

The casing 1 includes a ring-shaped upper plate 9, a ring-shaped lower plate 11, an inner wall body 13, and an outer wall body 15 to provide a closed inner space. The inner space is divided into upper and lower spaces by a partition 17. The upper space is a water retention space 19 to which water is supplied, and the lower space is a cleanser storage space 21 configured to store a cleanser.

The water supply part is for spraying and supplying water toward the washing space 7. The water supply part includes a water spray hole 23, a water supply tube 25, a connector 27, and a water control switch 29.

The water spray hole 23 is installed at an upper portion of the inner wall body 13 of the casing to face the washing space. In particular, the water spray hole 23 may be installed so that water is sprayed downward at an angle of 30° to 45° toward the washing space. This is to prevent water from splashing out of the washer.

The water spray hole 23 may be provided as a plurality of water spray holes 23 by perforation in the circumferential direction to spray thin streams of water like a shower head.

The water supply tube 25 is installed inside the handle 5 and has one end connected to the water spray holes 23 installed at the upper portion of the casing 1 and the other end extending to a rear end of the handle 5. The handle 5 itself may be a water supply tube.

The connector 27 is for connecting the water supply tube 25 and a water pipe and preferably, may allow the two to be connected in a one-touch manner.

The water control switch 29 is installed on the handle 5 or the water supply tube 25. The water control switch 29 may be provided in various ways. Various commercially available switching methods may be employed. For example, any of a pressing method, a rotating method, a lever method, and the like is possible.

Hereinafter, a cleanser supply part for supplying a cleanser toward the washing space will be described.

The cleanser supply part includes the casing 1 providing the cleanser storage space 21, a cleanser pump 31, and a cleanser ejection nozzle 33.

As described above, the lower space of the casing 1 that is formed by the partition 17 is the cleanser storage space 21. The cleanser pump 31 for pumping the cleanser contained in the casing 1 is installed on the upper portion of the casing 1 or on the handle 5. The cleanser pump 31 is a pump widely used in households to pump out various liquid products (a hand soap, a shampoo, a hand sanitizer, or the like), and specific illustration and description thereof are omitted.

The cleanser ejection nozzle 33 is installed on the inner wall body 13 of the casing. Only one cleanser ejection nozzle 33 may be provided. A cleanser D may be ejected in the form of bubbles or ejected in the form of a liquid.

A see-through window 35 for checking the remaining amount of the cleanser D may be provided on an outer sidewall of the casing. Also, an inlet for replenishing the cleanser and a cap 37 fixed to the inlet may be provided at the casing 1 or the handle 5.

A second brush 39 is installed in the circumferential direction on a bottom surface of the lower plate 11 of the casing. The second brush 39 is used when bathing a pet and is used for rubbing the pet's body.

A holder 41 is further installed on an upper end of the casing 1 for a user to easily apply a force while gripping the casing 1 by hand when bathing a pet.

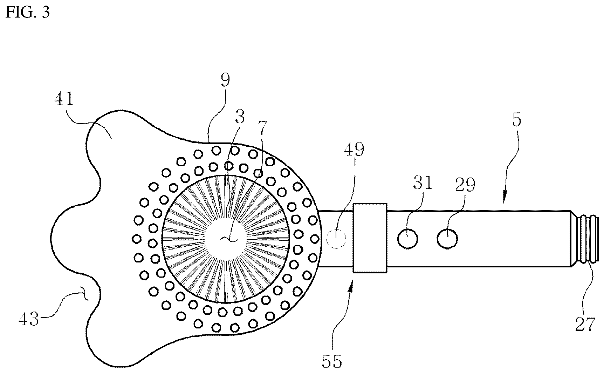

Two to four finger fitting grooves 43 into which the user's fingers may be fitted are provided in the holder 41 (see FIG. 3). Also, an anti-slip pad 45 (or embossed protrusions) for preventing slippage may be installed entirely or partially on a surface of the holder 41 that comes in close contact with the user's fingers.

According to another embodiment of the present invention, a cleanser mixing part for mixing the cleanser with water and ejecting the mixture when the water is sprayed may be further provided. The cleanser mixing part uses a principle that the cleanser naturally rapidly moves upward due to an ejection pressure of water when the water is sprayed.

The cleanser mixing part may include a cleanser suction tube 47 having a lower end extending to a bottom of the cleanser storage space 21 and an upper end connected to the water supply tube and a cleanser opening switch 49 installed at a middle of the cleanser suction tube 47. When the cleanser opening switch 49 is open and water is sprayed, the cleanser mixed with the water is sprayed through the water spray holes 23.

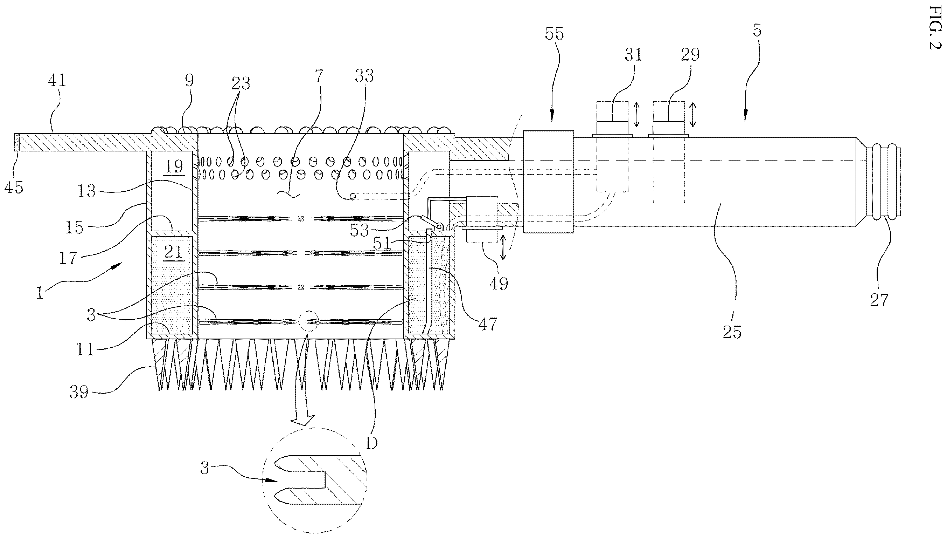

As illustrated in FIG. 2, the upper end of the cleanser suction tube 47 is connected to a cleanser ejection hole 51 provided in the partition 17, and the cleanser ejection hole 51 is opened and closed by a cleanser ejection hole plug 53 operated by the cleanser opening switch 49. The cleanser opening switch 49 may be provided at the bottom of a distal end of the handle 5 and serve as a detector.

According to still another embodiment of the present invention, the casing 1 and the handle 5 may be connected by a coupler 55 whose angle of connection is freely adjustable. Since the coupler 55 is freely rotatable according to the position of the pet's paw, the pet may feel more comfortable. The coupler 55 may be formed of a tube made of a flexible material and may include a locking device configured to selectively fix and prevent movement of the coupler 55.

The configurations illustrated in the drawings and described above are only exemplary embodiments based on the technical spirit of the present invention. Those of ordinary skill in the art may make various modifications to the embodiments based on technical common knowledge, but it should be noted that such modifications also belong to the scope of protection of the present invention. The embodiments disclosed above may be combined in various ways, and all possible combinations are within the scope of rights of the present invention.

## Claims

1. A multipurpose washer for pets, the multipurpose washer comprising:
a cylindrical casing (1) that is vertically open to provide a tunnel-like washing space (7) into which a pet's paw is able to be fitted;
a first brush (3) installed on an inner wall of the casing (1) to protrude and extend toward the washing space (7);
a handle (5) connected to one side of the casing (1);
a water supply part configured to spray and supply water toward the washing space (7); and
a cleanser supply part configured to supply a cleanser toward the washing space (7),
wherein the cleanser supply part includes the casing (1) including a ring-shaped upper plate (9), a ring-shaped lower plate (11), an inner wall body (13), and an outer wall body (15) to provide a cleanser storage space (21) configured to store a cleanser; a cleanser pump (31) installed on an upper portion of the casing (1) or on the handle (5) to pump the cleanser contained in the casing (1); and a cleanser ejection nozzle (33) installed on the inner wall body (13) of the casing (1) to eject the pumped cleanser, and
the water supply part includes a water spray hole (23) installed in the casing (1) to face the washing space (7); a water supply tube (25) installed inside the handle (5) and having one end connected to the water spray hole (23) and the other end extending to a rear end of the handle (5); a connector configured to connect the water supply tube (25) and a water pipe, and a water control switch (29) installed on the water supply tube (25).

2. The multipurpose washer of claim 1, further comprising:
a second brush (39) installed in a circumferential direction on a bottom surface of the lower plate (11) of the casing (1); and
a holder (41) installed on an upper end of the casing (1) for a user to easily apply a force while gripping the casing (1) by hand,
wherein finger fitting grooves (43) into which the user's fingers are able to be fitted are provided in the holder (41).

3. The multipurpose washer of claim 1, further comprising a cleanser mixing part configured to mix the cleanser with the water and eject the mixture when the water is sprayed,
wherein the cleanser mixing part includes a cleanser suction tube (47) having a lower end extending to a bottom of the cleanser storage space (21) and an upper end connected to the water supply tube (25); and a cleanser opening switch (49) configured to open or close an upper end of the cleanser suction tube (47) and installed on the handle (5).

4. The multipurpose washer of claim 2, wherein an anti-slip pad (45) configured to prevent slippage is installed on a surface of the holder (41) that comes in close contact with the user's fingers.

5. The multipurpose washer of claim 1, wherein the casing (1) and the handle (5) are connected by a coupler (55) whose angle of connection is freely adjustable.
